# EUROPEAN PATENT APPLICATION

(11) **EP 2 432 186 A1**
(43) Date of publication of application: **21.03.2012**
(21) Application number: 09845099.2
(22) Date of filing: 15.09.2009
(51) Int. Cl.: H04L 29/06, H04L 12/58

(54) **FILE UPLOADING REALIZATION METHOD AND SYSTEM FOR WEB APPLICATION**

(30) Priority: 26.05.2009 CN 200910202985
(71) Applicant: ZTE Corporation, Shenzhen, Guangdong 518057 (CN)
(72) Inventor: TIAN, Guanwei, Shenzhen Guangdong 518057 (CN)
(74) Representative: Manitz, Finsterwald & Partner GbR
(86) International application number: PCT/CN2009/073938
(87) International publication number: WO 2010/135883

(57) **Abstract**

The present invention provides a method and system for implementing file uploading in a WEB application, and the scheme is as follows: a user of a client inputs a file to be uploaded into a security trusted control, and the security trusted control uploads the file input by the user to a FTP server and uploads information related to the file to a WEB server, the WEB server then sends the information related to the file to an interface message processor, so that the interface message processor downloads the file from the FTP server according to the information related to the file and sends the file to a media resource board (MRB) server. The scheme optimizes the current file uploading flow, eliminates the step of uploading the file from the client to the WEB server via the HTTP protocol, and directly uploads the file from the client to the FTP server via the FTP protocol, thereby solving the bottleneck problem in the file uploading flow in the prior art, and thus reducing the load of the WEB server and greatly improving the performance and stability of the WEB application, therefore, the scheme has a relatively strong applicability.

## Description

### Technical Field

The present invention relates to a file transmission system and method in a WEB application, and particularly, to a method and system for uploading a file from a client to a server in the WEB application.

### Background of the Invention

With the development of communication technology, due to the advantages of the Browser/Server (B/S) structure over the Client/Server (C/S) structure, there are more and more services developed based on the B/S structure (WEB application), and the range of the services is wider and wider; the services are, for example, telecom value-added services, message services, and information management systems in various service applications or enterprise applications.

The WEB application is a main implementation of the B/S structure. The application system developed with WEB technology has an problem relating to concurrent access: users can access the server via browsers at any places as long as the users can connect to the network, therefore, the number of users concurrently accessing the same server may be very large, the concurrent access by the large number of users will bring great processing pressure on the server, and it is easily happen that the resources are not adequate (e.g., CPU is 100% occupied, memory overflows, or connections are not enough). For example, during the peak of concurrent access, the pressure from the WEB on the database connection is very big, every inquiry or operation by the user needs one database connection, but the number of connections provided by the database server is very limited, thus it is easy to appear the situation that the connections are not enough.

When there are a certain number of users at the WEB client concurrently uploading files, the system resources are easily fully occupied. The file uploading is a very common procedure in the WEB application and thus is a bottleneck in many system applications.

The most important resource in a color ring back tone system is the ring tone file, thus ring tone file uploading is also one of the most important and common procedures in the color ring back tone system. For example, in a color ring back tone system, a commonly used method for uploading a ring tone file is: the browser client uploads the ring tone file to the WEB server via the Hyper Text Transfer Protocol (HTTP) and stores the file under a temporary directory on the server; after the file is uploaded and stored successfully, the user submits description information (including information of the ring tone name, the singer, the provider and the price etc.) related to the ring tone from the client to the WEB server; after the submission is successful, the WEB server uploads the ring tone file from the WEB server to a configured FTP server via the File Transfer Protocol (FTP), and the WEB server further sends information related to the ring tone file, including information of the ring tone name, the singer, the provider, the price and the position of the ring tone file on the FTP server etc., to a interface message processor; and then the interface message processor extracts the path information of the ring tone file on the FTP server according to the received information, downloads the ring tone file from the FTP server, and puts the ring tone file in a Media Resource Board (MRB) server; by then, the ring tone file uploading is completed.

From the above ring tone file uploading flow, it can be seen that uploading a file in the network generally needs three steps:
in the first step, the client uploads the file to the WEB server via the HTTP protocol;
in the second step, the WEB server uploads the file to the FTP server; and
in the third step, the interface message processor uploads the file to the MRB server via the FTP server.

It is well known that the HTTP protocol is suitable for transferring small amount of information in the network, but is not suitable for file transmission due to the low transmission efficiency; moreover, if the B/S connection is carried out via the HTTP protocol, the connection is easy to break when the connection time is long. It can be seen that using the HTTP protocol to upload a file is a bottleneck in the whole file uploading flow.

### Summary of the Invention

The technical problem to be solved by the present invention is to provide a method and system for implementing file uploading in a WEB application, which can well solve the bottleneck problem in the file uploading flow in the WEB application.

In order to solve the above technical problem, the present invention provides a method for implementing file uploading in a WEB application, the method comprising:
a user of a client uploading a file to be uploaded to a File Transfer Protocol (FTP) server via a security trusted control.

Moreover, the method further comprises:
the user sending information related to the file to a WEB server via the security trusted control;
the user inputting the file and the information related to the file into a user operation interface of the security trusted control, and the user operation interface uploading the file to the FTP server and uploading the information related to the file to the WEB server.

Moreover, the operation interface uploads the file to the FTP server via the FTP and uploads the information related to the file to the WEB server via a Hyper Text Transfer Protocol (HTTP).

Moreover, the method further comprises:
the WEB server uploading the information related to the file to an interface message processor, the information related to the file comprising one or more of a file name, file provider information and path information of the filed uploaded to the FTP server;
the interface message processor acquiring the corresponding file from the FTP server according to the information related to the file received, and uploading the file to a Media Resource Board (MRB) server.

Moreover, before the step of the user inputting the file to be uploaded, the method further comprises:
deploying the security trusted control which is pre-developed on the WEB server, and citing the deployed security trusted control in a WEB page so as to be downloaded by the client.

Moreover, the step of developing the security trusted control comprises:
developing a control program for the client to upload a file according to requirements, and packaging the developed control program into a file packet;
performing code obfuscation on the file packet; and
creating a security key pair for the code obfuscated file packet and generating a digital signature, thereby completing the development of the security trusted control.

In order to solve the above technical problem, the present invention provides a system for implementing file uploading in a WEB application, comprising a client and a File Transfer Protocol (FTP) server, wherein
the client is configured for a user to input at least a file to be uploaded into a security trusted control and upload the input file to the FTP server via the security trusted control;
the FTP server is configured to receive and store the file uploaded from the client.

Moreover, the system further comprises a WEB server, wherein
the client is further configured for the user to upload the file to the FTP serve via a user operation interface of the security trusted control through the FTP, and upload information related to the file to the WEB server via a Hyper Text Transfer Protocol (HTTP);
the WEB server is configured to receive and store the information related to the file uploaded from the client.

Moreover, the system further comprises an interface message processor and a Media Resource Board (MRB) server, wherein
the WEB server is further configured to upload the information related to the file to the interface message processor, the information related to the file comprising one or more of a file name, file provider information and path information of the file uploaded to the FTP server;
the interface message processor is configured to acquire the corresponding file from the FTP server according to the information related to the file received, and upload the file to the MRB server;
the MRB server is configured to receive and store the file uploaded by the interface message processor.

Moreover, the WEB server is further configured to deploy the security trusted control which is pre-developed, and cite the deployed security trusted control in a WEB page so as to be downloaded by the client.

The present invention also provides a WEB server, which is configured to
deploy a pre-developed security trusted control so as to be downloaded by a client;
receive and store information related to a file uploaded by the client via a user operation interface of the security trusted control, wherein the file is uploaded by the client to a File Transfer Protocol (FTP) server via the user operation interface of the security trusted control so as to be downloaded by an interface message processor; and
upload the information related to the file to the interface message processor in order for the interface message processor to download the file from the FTP server according to the information related to the file and upload the file to a Media Resource Board (MRB) server;
thereby implementing efficient file uploading in a WEB application.

The present invention also provides a system for implementing file uploading in a WEB application, which comprises the above WEB server.

The method and system for implementing file uploading from a local client to a server in a WEB application provided by the present invention optimizes the current file uploading flow, eliminates the step of uploading the file from the client to the WEB server via the HTTP protocol, and directly uploads the file from the client to a FTP server via the FTP protocol, thereby solving the bottleneck problem in the file uploading flow in the prior art, and thus reducing the load of the WEB server and greatly improving the performance and stability of the WEB application, therefore, the method and system have a relatively strong applicability. Moreover, using the interface of the security trusted APPLET control makes it easier to implement some relatively complicated functions compared with the prior art.

### Brief Description of the Drawings

FIG. 1 is a flow chart of a first embodiment of the method for implementing ring tone file uploading in accordance with the present invention;
FIG. 2 is an illustration of the interface of the APPLET control running on a client browser developed with the method of the present invention;
FIG. 3 is an illustration of the interface of the dialogue box for selecting a file popped up after clicking the "Browse files" button in the interface shown in FIG. 2;
FIG. 4 is the flow chart of a second embodiment of the method for implementing ring tone file uploading in accordance with the present invention;
FIG. 5 is a schematic diagram of the key steps for developing the APPLET control that is security trusted at the WEB client in the method in accordance with the present invention;
FIG. 6 is a flow chart of the method expanded from the key steps shown in FIG. 3.

### Preferred Embodiments of the Present Invention

The inventive concept of the method and system for implementing file uploading in a WEB application provided in the present invention is: eliminating the bottleneck procedure of uploading the file from the client to the WEB server, and directly uploading the file from the client to the FTP server, and then the WEB server acquiring the corresponding file from the FTP server according to information of the file uploaded by the client. Wherein, the key point is to directly upload the file from the client to the FTP server, and the difficulty is: if the ACTIVE control running on the client is not security certificated, it cannot access the locally stored resources because it is restricted by the security model of the client. The ACTIVE control used in the present invention is implemented by an APPLET control. Firstly, an APPLET control program satisfying the requirements of the project is developed, and the APPLET control file is packaged into a Java Archive (JAR) file; in order to protect the JAR file from service logic divulgence caused by decompiling by some malicious hacker when being used at the client, code obfuscation of the JAR file is performed; and a pair of private and public keys are created with Jarsigner, wherein the private key is used to encrypt (lock) the JAR file to generate a digital signature of the JAR file, and the public key is used by the client to decrypt (unlock) the file to get the corresponding APPLET control. As such, the APPLET control that is security trusted at the client is developed and the APPLET control is deployed on the WEB server. The client downloads the security trusted APPLET control from the WEB server, and via the APPLET control, the client can upload a file from the local to the FTP server.

The technical scheme of the present invention will be set forth in detail below in conjunction with the drawings and preferred embodiments. Although the following embodiments involves ring tone file uploading, it is only used to explain rather than limit the present invention. That is, the technical scheme of the present invention is applicable to any file uploading from a client to a server.

### Embodiment 1

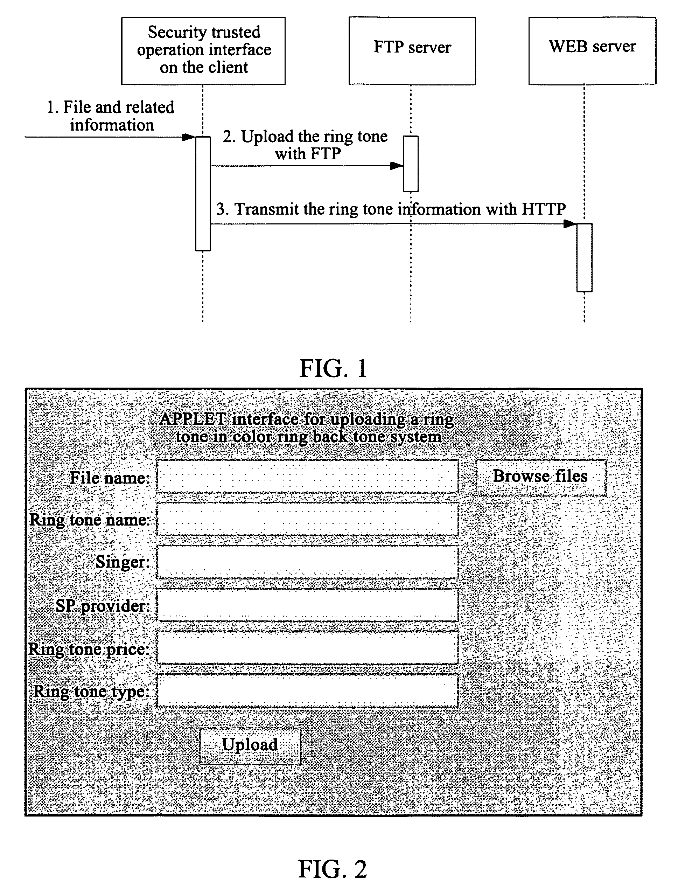

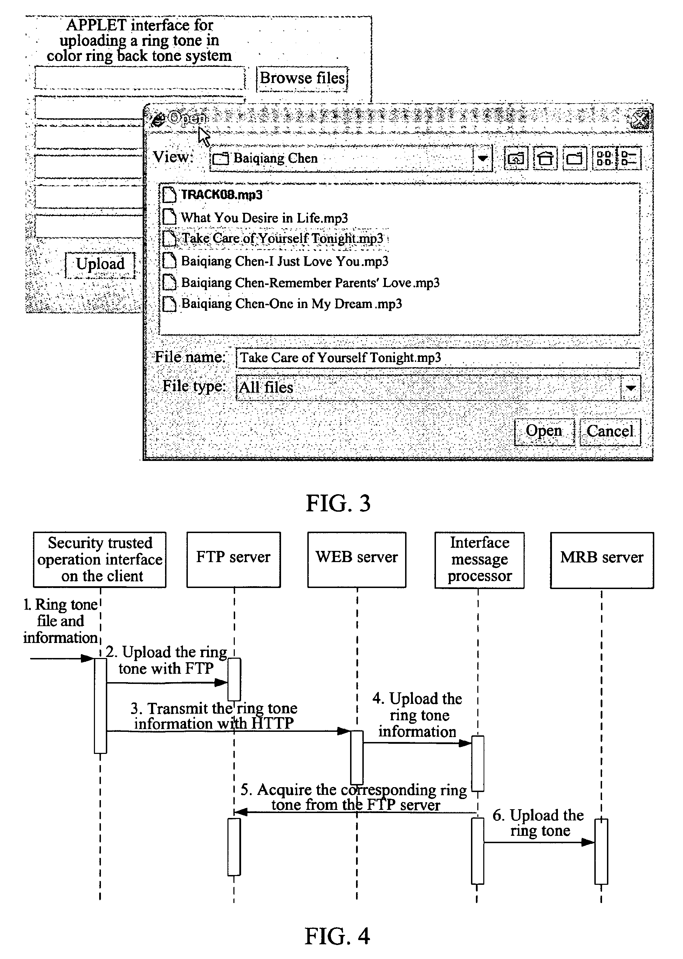

FIG. 1 shows a flow chart of a first embodiment of the method for implementing ring tone file uploading in accordance with the present invention, whereby a ring tone file is uploaded from a browser client to a WEB server, the flow including:
Step 1: the client user inputs the file to be uploaded and its related information via a security trusted operation interface;
   Wherein, the security trusted operation interface is realized by pre-developing an APPLET control program that is security trusted at the client. Of course, it is not the only implementation manner. For example, the security trusted operation interface can also be implemented by developing a Flex control program that is security trusted at the client.
   The information input boxes and buttons on the APPLET operation interface are shown in FIG. 2. The related information that can be input by the client user via this interface includes the file name, the ring tone name, the singer's name, the provider's name and the price etc.
   When clicking the "Browse files" button on the operation interface, a dialog box for selecting a file is popped up, as shown in FIG. 3. The user views the local file directories storing ring tone files via the dialog box and selects the file name of a ring tone file to be uploaded from a file directory, so as to input the file to be uploaded.
Step 2: the APPLET operation interface uploads the ring tone file input by the user to a FTP server;
   Preferably, the APPLET control uploads the file by using the FTP protocol which is specifically for uploading files and thus has more advantages compared with other protocols in uploading files.
   When clicking the "Upload" button on the abovementioned APPLET operation interface, the APPLET control uploads the ring tone file input by the user by using the FTP protocol.
   The FTP server should be pre-deployed and appoint the interaction information such as the login and file uploading path of the FTP server and other servers or clients (such as the WEB server, the WEB client, etc.), in order to guarantee secure access of the FTP server.
   After the client uploads the file to the FTP server, it needs to record the file name and the path information of the file stored on the FTP server, and send information such as the path of the file storage etc. to the WEB server while submitting ring tone information to the WEB server.
Step 3: the APPLET control uploads the ring tone related information input by the user to the WEB server via the HTTP protocol.
   When clicking the "Upload" button on the APPLET operation interface, the APPLET control also uploads the ring tone related information to the WEB server via the HTTP protocol while uploading the ring tone file.
   The uploaded ring tone related information includes the file name, the ring tone name, the singer's name, the provider's name, and the price etc., and also includes the path information of the file uploaded to the FTP server etc.
   The present invention requires development of a service program on the WEB server, and has no special requirement for the service code, but only requires that it can receive the information submitted by the client.

### Embodiment 2

FIG. 4 shows a flow chart of a second embodiment of the method for implementing ring tone file uploading in accordance with the present invention, whereby a ring tone file is uploaded from a browser client to a MRB server, the flow including:
Step 1: the client user inputs the file to be uploaded and its related information via a security trusted operation interface;
   The security trusted operation interface is realized by pre-developing an APPLET control program or Flex control program that is security trusted at the client.
Step 2: the APPLET operation interface uploads the ring tone file input by the user to a FTP server via the FTP protocol;
   The FTP server should be pre-deployed and appoint interaction information such as the login and file uploading path of the FTP server and other servers or clients (such as the WEB server, the interface message processor, the WEB client, etc.), in order to guarantee secure access of the FTP server.
   After the APPLET operation interface uploads the file to the FTP server, it needs to record the file name and the path information of the file stored on the FTP server, and send information such as the path of the file storage etc. to the WEB server while submitting ring tone information to the WEB server.
Step 3: the APPLET operation interface uploads the ring tone related information to the WEB server via the HTTP protocol;
   Wherein, the information input boxes and buttons on the APPLET operation interface are shown in FIG. 2, and since they have been described in the above, the description will not be repeated here.
   The uploaded ring tone related information includes the file name, the ring tone name, the singer's name, the provider's name, and the price etc., and also includes the path information of the file uploaded to the FTP server etc.
Step 4: the WEB server uploads the ring tone file and its related information uploaded by the user to an interface message processor;
   The client sends the file name and path information of the file stored on the FTP server together with the ring tone information to the WEB server. This step requires development of a service program on the WEB server; it has no special requirement for the service code and is implemented correspondingly according to the service requirements, but only requires that it can receive the information submitted by the client and send the information to the interface message processor via a SOCKET connection.
Step 5: the interface message processor acquires the corresponding ring tone file from the FTP server according to the received information related to the ring tone file;
Step 6: the interface message processor uploads the acquired ring tone file to the MRB server.

The present invention requires development of an interface message processor program and deployment of the interface message processor and the MRB server. After the interface message processor receives the ring tone information from the WEB server, it acquires the ring tone file from the FTP server according to the ring tone information and uploads the file to the MRB server; by then, the entire ring tone uploading flow is completed.

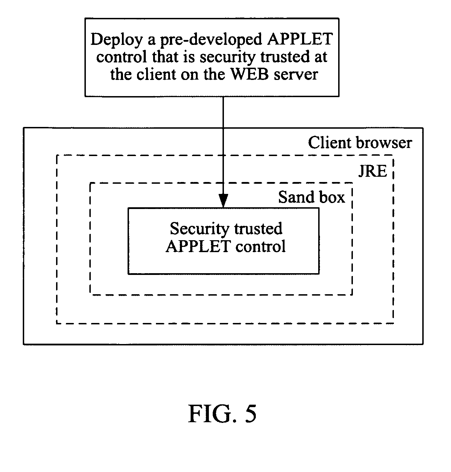

In the above two embodiments illustrated in the present invention, the security trusted operation interface is realized by pre-developing a control (e.g., APPLET control) program that is security trusted at the client, which is a key step in implementing the method for uploading a file in the present invention, that is, a pre-developed APPLET control program that is security trusted at the client is deployed on the WEB server, and the client downloads the security trusted APPLET control program from the WEB server to the local browser, as shown in FIG. 5.

Generally, using a developed APPLET control (or Flex control) on the server is of no problem, but when it is used on the client, as it runs in the Sand Box model in the Java Development Kit (JDK), its operation is subjected to the following restrictions:
A. The APPLET control is forbidden to read and write on the local disk;
B. Except the host downloading the APPLET control, it is forbidden to set up a connection with any other host;
C. The APPLET control is forbidden to load a new dynamic link library that directly calls a local method.

It can be seen that using an APPLET control that is developed with a conventional method is hard to implement uploading a file from the local to the server for reasons such as it is forbidden to access the local resources.

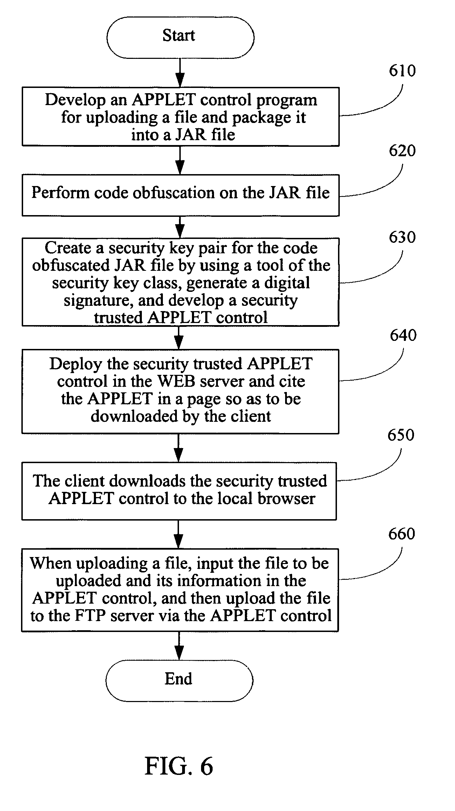

In order to solve the above problem, the present invention correspondingly provides a method for developing a control that is security trusted at the client, and taking the APPLET control as an example, the flow of the method is shown in FIG. 6, including:
Step 610: Develop an APPLET control program for a client to upload a file according to requirements, and package the program into a Java Archive (JAR) file;
   APPLET is a Java class inheriting JApplet, and generally an interface is initialized in the init method of this class. Wherein, the control JFileChooser is required when selecting a file, and calling this control in the message processing function of the "Browse files" button can pop up a dialog box for selecting a file; the code is as follows:

   ```
      public void actionPerformed(ActionEvent e)
         {
         filechoose.showOpenDialog(this);
      }
```

   A service encapsulated application logic can be called in the init method and the message processing function of the "Upload" button. As for the implementation class of the APPLET control, please refer to the file UploadRingApplet.java. After developing the related Java files of the APPLET control, a command as follows is used to package the related class files into the form of a JAR file (Jar packet):

   ```
      Jar cvf packet name class file path;
```
Step 620: Perform code obfuscation on the generated JAR file;
   In order to protect the generated JAR file from divulgence of the service logic internal implementation caused by decompiling the code by some malicious hacker when being used at the client, any JAVA code obfuscation technology can be used to perform code obfuscation on the JAR file, as such, the hacker cannot decompile the JAR file into the Java class files, thereby preventing the divulgence of the service logic.
   The JAVA code obfuscation technology used in the present invention includes Yguard or Proguard. Processing the Java class file according to the usage method required by each piece of software can protect its code to some extent, and the usage manner of a class after the obfuscation processing is the same as that of a common Java class.
Step 630: Create a security key pair by using a tool of the security key class, generate a digital signature for the code obfuscated JAR file, and develop a security trusted APPLET control;
   In order to normally use the ACTIVE control that is realized by the APPLET control at the client, a certificate authority should certificate the security of the ACTIVE control to certificate that the control is security trusted at the client. However, the cost of the certification by the certificate authority is very high and the period is very long. The present invention applies a mechanism to establish an APPLET control that is security trusted at the client, and which is allowed to operate local files on the client, and then a file on the client is directly uploaded to the FTP server via the FTP protocol.
   In order to realize an APPLET control that can securely access the local resources on the client, a pair of private/public keys should be created for the JAR file, wherein, the private key is used to encrypt the JAR file and generate a digital signature for the JAR file; the public key is provided to the client to validate and decrypt the downloaded JAR file. The present invention uses the keytool of the JDK to create and manage the private/public key pair and uses jarsigner to generate the digital signature of the JAR file.
   Wherein, the keytool is an effective tool for managing the security key and certificate, and it is used to create and manage a keystore. The keystore is a database for the private key and its related X.509 certificate chain (used to authenticate the corresponding public key). The keytool enables the user to manage the private/public key pair thereof by using the digital signature, manage the certificate relating to self-identification, and manage the data integrity and identification service. It also enables users to buffer their public keys during communication.
   (1) Use the keytool to generate a key certificate, that is, use the following sentence to generate a key certificate whose period of validity is 365 days:
      keytool -genkey -alias MyAppletkey -validity 365;
      wherein the MyAppletKey is the name of the certificate, and during the process of generating the certificate, there is a prompt for inputting a certificate password and information like the local unit organization, the certificate password will be used when performing digital signature for the JAR packet, and thus it should be memorized;
   (2) Perform digital signature for the APPLET control by using the jarsigner of the JDK according to the generated certificate, and the sentence is:
      jarsigner MyApplet.jar MyAppletkey;
      wherein the jarsigner is followed by the JAR packet (MyApplet.jar) that should be signed by the certificate and the certificate name (MyAppletkey), and there will be a prompt for inputting the certificate password during the execution of the command, a correct digital signature can be generated when the password set in generating the certificate is input.
Step 640: Deploy the security trusted APPLET control in the WEB server so as to be downloaded by the client;
   The APPLET control can be directly deployed in the WEB server, and then the APPLET control can be cited in a WEB page:

   ```
     <applet code="TestApplet.class" archive="MyApplet.jar" width="xxx" height="xxx"
 codebase="xxx" > </applet>;
```

   A configuration file can be provided in the WEB server to configure information such as the IP address of the FTP server, the user name, the password, the file uploading path, etc., which will be transmitted to the APPLET control as parameters after being encrypted. By using the operation interface of the downloaded APPLET control, the client user can upload the ring tone file to a designated position on the FTP server via the FTP protocol, and then upload the ring tone information to the WEB server via the HTTP protocol.
Step 650: The client downloads the security trusted APPLET control from the WEB server to the local browser;
   When using the APPLET control, the client will download the APPLET to the Java Runtime Environment (JRE) of the local browser for execution, as shown in FIG. 5.

According to the above embodiments, the present invention correspondingly provides a system for implementing file uploading in a WEB application, including a client, a FTP server and a WEB server which are sequentially connected with each other, wherein:
the client, also connected with the WEB server, is configured to download a security trusted APPLET control from the WEB server, and with the operation interface of this APPLET control, upload a local file to the FTP server via the FTP protocol and upload information related to the file and path information of the file uploading etc. to the WEB server via the HTTP protocol;
the FTP server is configured to receive and store the file uploaded from the client;
the FTP server stores the file uploaded by the client according to the file name and path information provided by the client;
the WEB server is configured to deploy a pre-developed security trusted APPLET control, when receiving a request for downloading the APPLET control from the client, send the APPLET control to the client, and receive and store the information related to the file uploaded by the client.

The information related to the uploaded file includes the file name, the ring tone name, the singer's name, the provider's name, and the price etc., and also includes the path information of the file uploaded to the FTP server etc.

A configuration file can be provided in the WEB server to configure information such as the IP address of the FTP server, the user name, the password, the file uploading path, etc., which is transmitted to the APPLET control as parameters after being encrypted. By using the operation interface of the downloaded APPLET control, the client user can upload the ring tone file to a designated position on the FTP server via the FTP protocol and upload the ring tone information to the WEB server.

The above system also includes an interface message processor and a MRB server, wherein:
the WEB server, also connected with the interface message processor via SOCKET, is configured to send the received information related to the uploaded file to the interface message processor;
the interface message processor, respectively connected with the FTP server and the MRB server, is configured to acquire the corresponding file from the FTP server according to the information related to the uploaded file received from the WEB server, and upload the acquired file to the MRB server;
the MRB server is configured to receive and store the file uploaded by the interface message processor.

What is described above is just preferred embodiments of the present invention, and is not intended to limit the present invention. For those skilled in the art, the present invention may have various modifications and variations. Without departing from the spirit and essence of the present invention, any of the modifications, equivalent substitutions, and improvements etc. shall fall into the protection scope of the present invention.

### Industrial Applicability

The method and system for implementing file uploading from a local client to a server in a WEB application provided by the present invention optimizes the current file uploading flow, eliminates the step of uploading the file from the client to the WEB server via the HTTP protocol, and directly uploads the file from the client to a FTP server via the FTP protocol, thereby solving the bottleneck problem in the file uploading flow in the prior art, and thus reducing the load of the WEB server and greatly improving the performance and stability of the WEB application, therefore, the method and system have a relatively strong applicability. Moreover, using the interface of the security trusted APPLET control makes it easier to implement some relatively complicated functions compared with the prior art.

## Claims

1. A method for implementing file uploading in a WEB application, comprising:
a user of a client uploading a file to be uploaded to a File Transfer Protocol (FTP) server via a security trusted control.

2. The method as claimed in claim 1, further comprising:
said user sending information related to said file to a WEB server via the security trusted control;
wherein the step of said user uploading said file to said FTP server via said security trusted control and uploading the information related to said file to the WEB server via said security trusted control comprises: said user inputting said file and the information related to said file into a user operation interface of the security trusted control, and the user operation interface uploading said file to said FTP server and uploading the information related to said file to said WEB server.

3. The method as claimed in claim 2, wherein
the step of said user operation interface uploading said file to said FTP server and uploading the information related to said file to said WEB server is implemented by: said user operation interface uploading said file to said FTP server via the FTP and uploading the information related to said file to said WEB server via a Hyper Text Transfer Protocol (HTTP).

4. The method as claimed in claim 2, after the step of said user operation interface uploading said file to said FTP server and uploading the information related to said file to said WEB server, the method further comprising:
said WEB server uploading the information related to said file to an interface message processor; and
said interface message processor acquiring said file from said FTP server according to the information related to said file received, and uploading said file to a Media Resource Board (MRB) server;
wherein the information related to said file comprises one or more of a file name, file provider information and path information of said filed uploaded to said FTP server.

5. The method as claimed in any claim in claims 1 to 4, before the step of said user uploading the file to be uploaded to said FTP server and uploading the information related to the file to be uploaded to said WEB server, the method further comprising:
developing said security trusted control, deploying said security trusted control on said WEB server, and citing the deployed security trusted control in a WEB page so as to be downloaded by said client.

6. The method as claimed in claim 5, wherein the step of developing said security trusted control comprises:
developing a control program for the client to upload a file according to requirements, and packaging the developed control program into a file packet;
performing code obfuscation on the file packet; and
creating a security key pair for the code obfuscated file packet and generating a digital signature;
thereby completing the development of said security trusted control.

7. A system for implementing file uploading in a WEB application, comprising a client and a File Transfer Protocol (FTP) server, wherein
the client is configured for a user to input a file to be uploaded into a security trusted control and upload the input file to the FTP server via the security trusted control;
the FTP server is configured to receive and store the file uploaded from the client.

8. The system as claimed in claim 7, further comprising a WEB server, wherein
the client is further configured for the user to upload said file to the FTP serve via a user operation interface of said security trusted control through the FTP, and upload information related to said file to the WEB server via a Hyper Text Transfer Protocol (HTTP);
the WEB server is configured to receive and store the information related to said file uploaded from the client.

9. The system as claimed in claim 8, further comprising an interface message processor and a Media Resource Board (MRB) server, wherein
the WEB server is further configured to upload the information related to said file to the interface message processor;
the interface message processor is configured to acquire said file from the FTP server according to the information related to said file received, and upload said file to the MRB server;
the MRB server is configured to receive and store said file uploaded by the interface message processor;
the information related to said file comprises one or more of a file name, file provider information and path information of said file uploaded to the FTP server.

10. The system as claimed in any claim in claims 7 to 9, wherein
the WEB server is further configured to deploy said security trusted control which is pre-developed, and cite the deployed security trusted control in a WEB page so as to be downloaded by the client.

11. A WEB server, configured to
deploy a pre-developed security trusted control so as to be downloaded by a client;
receive and store information related to a file uploaded by the client via a user operation interface of the security trusted control, wherein said file is uploaded by the client to a File Transfer Protocol (FTP) server via the user operation interface of the security trusted control so as to be downloaded by an interface message processor; and
upload the information related to said file to the interface message processor in order for the interface message processor to download said file from the FTP server according to the information related to said file and upload said file to a Media Resource Board (MRB) server;
thereby implementing efficient file uploading in a WEB application.

12. A system for implementing file uploading in a WEB application, comprising a WEB server as claimed in claim 11.
